# EUROPEAN PATENT APPLICATION

(11) **EP 4 571 906 A1**
(43) Date of publication of application: **18.06.2025**
(21) Application number: 23216254.5
(22) Date of filing: 13.12.2023
(51) Int. Cl.: H01M 8/1053, C25B 13/08, H01M 8/1081, H01M 8/1039, H01M 8/10, B01D 71/36, H01M 8/1018

(54) **HYDROGEN ION CONDUCTIVE MULTI-LAYER COMPOSITE MEMBRANE**

(71) Applicant: Komemtec Co., Ltd., Yeonggwang-gun, Jeollanam-do 57055 (KR)
(72) Inventor: CHUL, Kim Sung, 57055 Yeonggwang-gun (KR); TAEK, Kim Young, 57055 Yeonggwang-gun (KR)
(74) Representative: Isarpatent

(57) **Abstract**

The present invention relates to a hydrogen ion conductive multilayer composite membrane comprising one or more inner reinforced membrane comprising a porous PTFE layer impregnated with an ionomer composition and outer reinforced membranes positioned on both sides of the inner reinforced membrane, wherein the outer reinforced membranes comprise a porous PTFE layer impregnated with an ionomer composition.

## Description

### FIELD OF THE INVENTION

The present invention relates to hydrogen ion conductive multi-layer composite membrane.

### BACKGROUND OF THE INVENTION

Water electrolysis is a technology to obtain hydrogen by electrolyzing water, and can produce hydrogen in an environmentally friendly manner. Types of water electrolysis are divided into proton exchange membrane (PEM), anion exchange membrane (AEM), alkaline, and solid oxide.

Meanwhile, fuel cells are high-efficiency power generation devices, and have the advantage of being more efficient than existing internal combustion engines, requiring less fuel, and being a pollution-free energy source that does not generate environmental pollutants such as SOx, NOx, and VOC. In addition, there are additional advantages such as a small location area required for production facilities and a short construction period, and can be applied to mobile power sources such as portable devices, transportation power sources such as automobiles, and distributed power generation that can be used for home use and power business. The fields are diverse.

Fuel cells are broadly classified into five types depending on operating temperature and electrolyte, specifically alkaline fuel cells (AFC), phosphoric acid fuel cells (PAFC), molten carbonate fuel cells (MCFC), and solid oxide fuel cells (SOFC), polymer electrolyte fuel cells (PEMFC), and direct methanol fuel cells (DMFC). Among them, polymer electrolyte fuel cells with excellent mobility are receiving great attention.

Electrolyte membranes used in cation exchange membrane water electrolysis and polymer electrolyte fuel cells are mainly fluorocarbon-based electrolyte membranes, and a representative example is Nafion, a perfluorinated hydrogen ion exchange membrane developed by DuPont in the United States in the early 1960s. In addition to Nafion, similar perfluorinated polymer electrolyte commercial membranes comprise Asahi Chemicals' Aciplex-S membrane, Dow Chemicals' Dow membrane, and Asahi Glass' Flemion membrane, etc.

This single membrane (Casting Membrane) is composed only of ion-conducting electrolytes, so it is easy to manufacture and is widely applied as experimental and mass-produced products. However, there is a problem with durability as fatigue of the material accumulates due to changes in volume under the operating conditions of the water electrolysis system and fuel cell system. In addition, as the thickness of the membrane increases, membrane resistance increases and electrochemical performance decreases, and when the membrane thickness is made thin, performance deteriorates due to problems with hydrogen permeation and durability.

Therefore, a solution to the above problem is required.

### SUMMARY

The objective of the present invention is to provide a hydrogen ion conductive multi-layer composite membrane having excellent durability, ion conductivity, and hydrogen permeation reduction effect.

In addition, the objective of this invention is to provide a water electrolysis system and fuel cell using the hydrogen conductive multi-layer composite membrane as a separation membrane.

However, the objectives of the present invention are not limited to the objectives mentioned above, and other objectives not mentioned will be clearly understood by those skilled in the art from the following description.

As means to solve the above problems,
The present invention provides a hydrogen ion conductive multilayer composite membrane comprising one or more inner reinforced membrane comprising a porous PTFE layer impregnated with an ionomer composition and outer reinforced membranes positioned on both sides of the inner reinforced membrane, wherein the outer reinforced membranes comprise a porous PTFE layer impregnated with an ionomer composition.

In addition, the average pore size and porosity of the porous PTFE layer of the outer reinforced membrane may be smaller than the average pore size and porosity of the PTFE layer of the inner reinforced membrane.

In addition, the average pore size of the PTFE layer of the outer reinforced membrane may be in the range of 0.1 um to 0.2 um, and the porosity may be in the range of 70% to 80%. The average pore size of the PTFE layer of the inner reinforced membrane may be in the range of 0.2 um to 0.4 um, and the porosity may be in the range of 80% to 90%.

In addition, the inner reinforced membrane may be one or may be stacked in the range of two to five.

In addition, the outer reinforced membrane may comprise a PTFE layer impregnated with an ionomer; a surface modification layer formed by plasma surface treatment on one or both sides of the PTFE layer; and an ionomer layer coated on the surface modification layer.

In addition, the inner reinforced membrane may comprise a PTFE layer impregnated with an ionomer; a surface modification layer formed by plasma surface treatment on one or both sides of the PTFE layer; and an ionomer layer coated on the surface modification layer.

In addition, the viscosity and ionomer concentration of the ionomer composition used to coat the ionomer layer on the surface modification layer may be higher than the viscosity and ionomer concentration of the ionomer composition used to impregnate the inside of the PTFE layer.

In addition, the viscosity difference may be in the range of 10 cp to 100 cp at 25°C, and the concentration difference may be in the range of 30% to 80% by weight.

In addition, one or more of the inner reinforced membrane and the outer reinforced membrane can be treated with acid to reduce pores.

In addition, the inner reinforced membrane and the outer reinforced membrane are pre-treated with plasma before lamination, coated with ionomer composition, and then laminated, wherein another ionomer coating layer may exist between the inner reinforced membrane and the outer reinforced membrane.

In addition, one or more catalyst mesh layers may exist by laminating catalyst mesh layer between the at least one outer reinforced membrane and the at least one inner reinforced membrane.

The present invention also provides a water electrolysis system and a fuel cell comprising the hydrogen ion conductive multi-layer composite membrane as a separation membrane.

The hydrogen conductive multi-layer composite membrane according to the present invention has excellent durability, ion conductivity, and hydrogen permeation reduction effects, and thus may be usefully used as a water electrolysis system and a separator for a fuel cell.

The above effects and additional effects will be described in detail below.

### BRIEF DESCRIPTION OF THE DRAWINGS

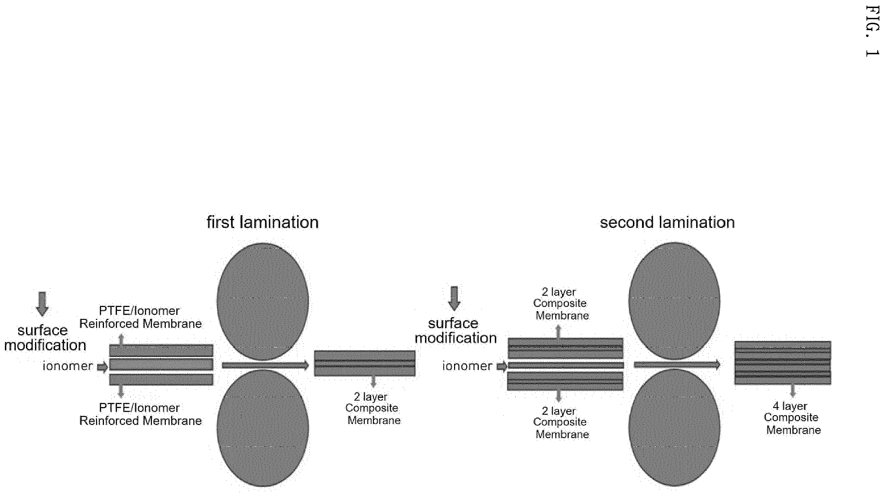

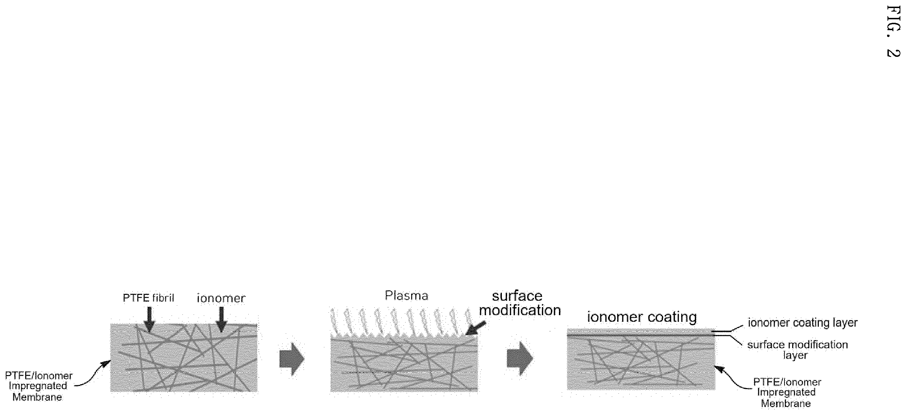

FIG. 1 and FIG. 2 are schematic diagrams of a structure and manufacturing process of a hydrogen ion conductive multi-layer composite membrane in accordance with an embodiment of this invention.

### DETAILED DESCRIPTION

Before describing the present invention in detail below, it should be understood that the terms used in the present specification are intended to describe specific embodiments and are not intended to limit the scope of the present invention, which is limited only by the scope of the attached patent claims. All technical and scientific terms used in the present specification have the same meaning as those generally understood by those skilled in the art unless otherwise stated.

Throughout this specification and claims, the term "comprise, comprises, comprising" means including the mentioned object, step or group of objects, and is not used to exclude any other object, step or group of objects or group of steps, unless otherwise stated.

Meanwhile, various embodiments of the present invention may be combined with any other embodiments unless there is a clear contrary point.

Hereinafter, the present invention will be described in more detail.

A hydrogen ion conductive multi-layer composite membrane according to one embodiment of the present invention comprises an inner reinforced membrane comprising a porous PTFE layer impregnated with an ionomer composition and an outer reinforced membrane located on both sides of the inner reinforced membrane, wherein the outer reinforced membrane comprises a porous PTFE layer impregnated with an ionomer composition.

The inner reinforced membrane may be one, and may be two or more, as illustrated in FIG. 1. Preferably, the membrane may be stacked within a range of two to five. The thickness of the hydrogen-conducting multi-layer composite membrane may be within the range of 20 µm to 100 µm, and may be within the range of 30 µm to 60 µm when thinning, durability, hydrogen ion conductivity, hydrogen permeation reduction, etc. are comprehensively considered.

The porous PTFE layer may be a PTFE membrane having porosity by expanding or stretching. The porous PTFE membrane may be used by obtaining a commercial product suitable for required performance or may be directly manufactured.

As a method of manufacturing the porous PTFE membrane, a known method may be used. For example, a porous PTFE membrane may be prepared through the following steps. First, a preliminary molded body may be obtained by mixing the tetrafluoroethylene powder with a lubricant, and then first forming the preliminary molded body to be obtained, the preliminary molded body may be extruded to obtain a rod-shaped primary molded body, the primary molded body may be processed into a sheet shape to obtain a secondary molded body, and the secondary molded body may be dried to remove the lubricant, and then the secondary molded body may be stretched in a horizontal direction and a vertical direction. By controlling the type, content, and stretching process conditions of the powder, it is possible to manufacture a PTFE membrane having desired performance.

The porous PTFE layer of the outer reinforced membrane and the PTFE layer of the inner reinforced membrane may use the same PTFE membrane. More preferably, the average pore size and porosity of the porous PTFE layer of the outer reinforced membrane may be smaller than the average pore size and porosity of the PTFE layer of the inner reinforced membrane. By using a relatively small pore size and porosity of PTFE layer in the outer reinforced membrane, hydrogen that may be introduced from the outside may be blocked, thereby reducing hydrogen permeability and improving durability. The PTFE layer of the inner reinforced membrane can increase the impregnation of the ionomer by using the relatively large pore size and porosity, and the hydrogen conductivity can be improved by impregnating the ionomer in a high content.

Specifically, the PTFE layer of the outer reinforced membrane may have an average pore size of 0.1 to 0.2 µm and a porosity of 70% to 80%, and the PTFE layer of the inner reinforced membrane may have an average pore size of 0.2 to 0.4 µm and a porosity of 80% to 90%. The average pore size difference between the two PTFE layers may be in a range of 0.05 to 0.3 µm, and the difference in porosity may be in a range of 5% to 20%.

The ionomer composition may comprise a conductive ionomer, a solvent, and a surfactant. Optionally, a radical scavenger may be further comprised.

As the conductive ionomer, any hydrogen ion conductive polymer may be used. For example, a polymer resin having a cation exchange group selected from the group consisting of a sulfonic acid group, a carboxylic acid group, a phosphoric acid group, a phosphonic acid group and derivatives thereof may be used, wherein the cation exchange group has hydrogen ion conductivity.

For example, the conductive polymer may comprise at least one selected from a fluorine-based polymer, a benzimidazole-based polymer, a polyimide-based polymer, a polyetherimide-based polymer, a polyphenylene sulfide-based polymer, a polyethersulfone-based polymer, a polyetherketone-based polymer, and a polyphenylquinoxalin-based polymer.

Preferably, a perfluorine-based sulfonated ionomer may be used as the conductive ionomer. Specifically, polyperfluorosulfonate (product name Nafion, Dupont) may be used as the perfluorine-based sulfonated ionomer. In addition, commercialized products such as Aciplex (Asahi Casei Chemical), Flemion (Asahi Glass), Fumatech, and the like may be used.

As the solvent, commonly used solvents such as N-methylpyrrolidone, isopropyl alcohol, and normal propyl alcohol may be used.

Considering the affinity with PTFE and environmental problems together, it is preferable that the surfactant comprises a hydrophobic group in which the hydrogen of the hydrocarbon is partially substituted with fluorine. The hydrophilic group of the surfactant is preferably a hydrophilic group having an affinity with an ionomer with a sulfonic acid group.

A known surfactant may be used, and as an example, one selected from the group consisting of Zonyl-based one of Du Pont, Novec-based one of 3M, or a mixture thereof may be used. Specifically, as the zonyl-based surfactant, Zonyl TBS (RfCH2CH2SO3X (X=H or NH4), Rf=F (CF2CF2)3-8), Zonyl FSN (RfCH2CH20(CH2CH20)xH), Zonyl FSP (RfCH2CH20)P(0)(0NH4)2, or the like may be used. Also, as the Novec-based surfactant, Novec 4200 (Amnium Fluoroalkylsulfonate), Novec 4300 (Amnium Fluoroalkylsulfonate), Novec 4430 (polymeric fluorochemical active), Novec 4432 (polymeric fluorochemical activities) or the like may be used.

The method of impregnating the porous PTFE layer with an ionomer composition is not limited, and there are methods such as applying an ionomer composition to the porous PTFE layer or immersing PTFE layer in the ionomer composition. By impregnation, the ionomer composition penetrates into the porous PTFE layer and fills the inside, and may remain on the surface of the PTFE layer.

Before the impregnation process, the impregnation of the ionomer composition may be further improved by plasma pretreatment of porous PTFE layer. Plasma treatment may be performed on one or both surfaces of PTFE layer.

Surface modification technology by plasma treatment applies various types of energy and particles to the surface, increases roughness by applying physical impact to the surface, cuts polymer chains, or forms new chemical bonds, resulting in an increase in hydrophilic functional groups.

As plasma, there are a low pressure plasma method that generates plasma by discharging at low pressure and an atmospheric pressure plasma method that generates plasma by discharging at normal pressure, and preferably room temperature and atmospheric pressure plasma method. Atmospheric pressure plasma technology can generate efficient, stable, and uniform plasma discharge at normal pressure, that is, atmospheric pressure (760 Torr), and improve economy and productivity without using a vacuum system that is expensive.

After impregnation, heat is applied to the support so that the ionomer may crystallize, and heat treatment is preferably performed with two types of heat sources. If the gas generated during heat treatment is not stepwise removed, a problem of cracking after heat treatment may occur, causing a problem in hydrogen permeability and durability. Specifically, heat treatment may be first performed at 150 to 210°C through hot air, and heat treatment may be secondarily performed at 50 to 100°C with near-infrared (NIR).

On the other hand, the ionomer-impregnated PTFE membrane can further improve durability and hydrogen permeability reduction performance by plasma treatment again to form a surface modification layer and coating the surface modification layer with an ionomer composition to form ionomer layer.

Specifically, as shown in FIG. 2, the outer reinforced membrane may comprise a PTFE layer impregnated with an ionomer, a surface modification layer formed by plasma surface treatment and heat treatment on the outer or both surfaces of the PTFE layer, and an ionomer layer coated on the surface modification layer formed on the outer or both surfaces(the drawing where both sides are treated is omitted).

Similarly, the inner reinforced membrane may comprise a PTFE layer impregnated with an ionomer, a surface modification layer formed by plasma surface treatment and heat treatment on the outer surface or both surfaces of the PTFE layer, and an ionomer layer coated on the surface modification layer formed on the outer surface or both surfaces.

Here, the viscosity and ionomer concentration of the ionomer composition used to coat the surface-modified layer with an ionomer may be higher than the viscosity and ionomer concentration of the ionomer composition used to impregnate the ionomer in the PTFE layer. Since the ionomer is already impregnated inside the PTFE layer, the ionomer composition used to coat the surface-modified layer may have a relatively high viscosity and ionomer concentration to secure coating properties, coating layer stability, and uniformity rather than impregnation properties.

The difference in viscosity of the two ionomer compositions may range from 10 to 100 cp at 25°C, and the difference in concentration may range from 30 to 80 wt%. Specifically, the ionomer composition having a low viscosity may have a viscosity of 10 to 30 cp at 25°C, and the high viscosity ionomer composition may have a viscosity of 40 to 110 cp at 25°C. Also, the low concentration ionomer composition may have a concentration of 5 to 25 wt%, and the high concentration ionomer composition may have a concentration of 40 to 85 wt%.

At least one of the prepared inner reinforced membrane and outer reinforced membrane may be post-treated with acid to reduce pores that interfere with ion conduction and increase hydrogen permeation. The acid solution is not limited, and a commonly used acid such as sulfuric acid, hydrochloric acid, or nitric acid may be used. The concentration of the acid solution may be in the range of 0.01 to 5 mol concentration, and the acid treatment may be in the form of applying the acid solution to the reinforced membrane or immersing the reinforced membrane in the acid solution, but is not limited. After acid treatment, the reinforced membrane may be prepared by washing with deionized water, applying pressure to the reinforced membrane to a thickness in the range of 10 to 15 µm, and heat treatment may be performed to prepare the reinforced membrane.

The inner reinforced membrane and the outer reinforced membrane thus manufactured may be laminated as shown in FIG. 1 to form a hydrogen ion conductive multi-layer composite membrane. Before lamination, the laminated surface of the reinforced membrane may be pretreated with plasma, and the surface pretreated may be coated with an ionomer composition and then laminated. In this case, an added ionomer coating layer may exist between the inner reinforced membrane and the outer reinforced membrane. The added ionomer coating layer may form an interface distinguished from the plasma-treated surface, or when the ionomer is coated, the ionomer composition may penetrate into the interface and a part of the inside of the reinforced membrane so that the interface may not be visible.

As shown in the embodiment to be described later, the hydrogen ion conductive multi-layer composite membrane may further comprise a catalyst layer therein, or may optionally further comprise other functional layers.

In the hydrogen ion conductive multi-layer composite membrane according to an embodiment of the present invention, the outer reinforced membrane may be in a range of 15% to 40% based on the thickness, and the inner reinforced membrane may be in a range of 60% to 85%. Within the above range, durability, ion conductivity, and hydrogen permeation reduction effects may be excellent.

The hydrogen conductive multi-layer composite membrane of the present invention may be very usefully used as a separation membrane of a water electrolysis system and a fuel cell.

The type and structure of the water electrolysis system and fuel cell to which the hydrogen ion conductive multi-layer composite membrane of the present invention is applied as a separator is not limited, and since it is known in detail, the description will be omitted. Any water electrolysis system and fuel cell in which hydrogen ions are conducted through the separator may be applied without limitation.

Hereinafter, the present invention will be described in more detail based on embodiments. Furthermore, the scope of the present invention is not limited to the following embodiments.

### EXAMPLES

### Preparation Example 1-1: Preparation of ionomer composition A

Polyperfluorosulfonate (trade name Nafion, Dupont) was used as a perfluorine-based sulfonated ionomer as a conductive ionomer, isopropyl alcohol (IPA) was used as a solvent, and the ionomer was set to 12 wt% in the total composition. To improve impregnation, a surfactant was added in an amount of 0.5 wt% in the total composition.

After dispersing the ionomer composition for 1 hour at 1000-2000 rpm using a Shear Stress device, the composition was secondarily dispersed for 1 hour using an Ultra-Sonic device under the condition of 30 to 50%, so that ionomer molecules were uniformly distributed in the composition. This is to facilitate impregnation into PTFE membrane pores by controlling the rheological particle size.

The final viscosity of the ionomer composition was measured at 20 cp at 25°C.

### Preparation Example 1-2: Preparation of ionomer composition B

A process was performed in the same manner as in Preparation Example 1-1, except that the ionomer was 60 wt% in the total solution. The viscosity of the ionomer was measured at 25°C to 68 cp.

### Preparation Example 2-1: Preparation of PTFE/Ionomer Impregnated Membrane A

Expanded porous PTFE A was prepared. The average pore size and porosity of porous PTFE A were 0.15 µm and 75%.

Porous PTFE A was first subjected to a primary plasma treatment at 220V and 2-10A conditions with room temperature and atmospheric pressure. After that, the ionomer composition A prepared in Preparation Example 1-1 was impregnated into the support on the surface of PTFE A surface modified by the primary plasma treatment. After impregnation, the support was heat-treated so that the ionomer could be crystallized. Heat treatment was performed at 100 to 150°C through hot air to prepare a PTFE/ionomer impregnated membrane A.

### Preparation Example 2-2 : Preparation of PTFE/Ionomer Impregnated Membrane B

Expanded porous PTFE B was prepared. The average pore size and porosity of the porous PTFE B are 0.30 µm and 85%.

A PTFE/ionomer wetted membrane B was prepared in the same method as in Preparation Example 2-1, except that porous PTFE B was used instead of porous PTFE A.

### Preparation Example 3-1: Preparation of PTFE/Ionomer Reinforced Membrane A

The surface was modified by performing a second plasma treatment on the upper surface of the impregnation membrane A of Preparation Example 2-1 under the conditions of 220V and 1-4A with room temperature and atmospheric pressure. Thereafter, the ionomer composition B prepared in Preparation Example 1-2 was coated on the newly formed surface modification layer. After coating, two-source heat treatment was performed at 150-210°C of hot air and 0-100°C of near-infrared (NIR).

Then, the opposite side of the impregnation membrane A was also subjected to plasma surface modification layer formation treatment, ionomer composition B coating, and heat treatment under the same conditions as above to prepare PTFE/ionomer reinforced membrane A.

### Preparation Example 3-2: Preparation of PTFE/Ionomer Reinforced Membrane B

A PTFE/ionomer reinforced membrane B was produced in the same manner as in Preparation Example 3-1, except that the impregnated membrane B of Preparation Example 2-2 was used instead of the impregnated membrane A of Preparation Example 2-1.

### Preparation Example 3-1-1: Post-treatment of PTFE/Ionomer Reinforced Membrane A

The reinforced membrane A of Preparation Example 3-1 was treated with acid to perform post-treatment. As the acid solution, the reinforced membrane A was treated using an aqueous sulfuric acid solution having a concentration of 1.0 mol, and washed with deionized water to reduce pores that may occur during the impregnation and drying process. Thereafter, the reinforced membrane was pressurized to prepare a reinforced membrane A having a thickness of 8 µm, and heat treatment was performed at 180 to 200°C.

### Preparation Example 3-2-1: Post-treatment of PTFE/Ionomer Reinforced Membrane B

A reinforced membrane B with a thickness of 15 µm was produced by performing post-treatment in the same manner using the reinforced membrane B of the Preparation Example 3-2 instead of the reinforced membrane A of the Preparation Example 3-1.

### Preparation Example 4-1: Preparation of PTFE/Ionomer Multi-layer Composite Membrane A

One side of the PTFE/ionomer reinforced membrane A of the Preparation Example 3-1-1 was subjected to plasma treatment under the conditions of 220V and 2-10A with room temperature and atmospheric pressure to modify the surface.

On the other hand, one side of PTFE/ionomer reinforced membrane B of Preparation Example 3-2-1 was plasma-treated under the same conditions to modify the surface.

After that, the plasma treatment surface of PTFE/ionomer reinforced membrane A was coated with the ionomer composition B of Preparation Example 1-2, the plasma treatment surface of PTFE/ionomer reinforced membrane B was brought into contact with the coating layer of the ionomer composition B, and then thermally laminated to prepare a PTFE/ionomer multilayer composite membrane with two PTFE layer. After that, heat treatment was performed at 150-210°C through hot air, and was treated by NIR heat treatment at 50-100°C.

Two PTFE/ionomer multilayer composite membranes with the two PTFE layer prepared above were prepared, and the exposed surfaces of each PTFE/ionomer reinforced membrane B were plasma-treated in the same manner as above to modify the surface. After that, the plasma treatment surface of any one reinforced membrane B was coated with the ionomer composition B of Preparation Example 1-2 and thermally bonded in the same manner as above to prepare a PTFE/ionomer multilayer composite membrane with four PTFE layer, and heat treatment was performed in the same manner as above to finally prepare a PTFE/ionomer composite membrane with four PTFE layer. The thickness of the multilayer composite membrane was measured to be about 50 µm.

### Preparation Example 4-2: Preparation of PTFE/ionomer Multilayer Composite Membrane B

Plasma treatment, ionomer coating, and thermal laminating were performed in the same manner as in Preparation Example 4-1, but the reinforced membrane A/the reinforced membrane B/the reinforced membrane A structure was stacked and thermally laminated to prepare a PTFE/ionomer multilayer composite membrane B with three PTFE layer with one inner reinforced membrane B. The thickness of the multilayer composite membrane was measured to be about 35 µm.

### Preparation Example 4-3: Preparation of PTFE/ionomer Multilayer Composite Membrane C

Plasma treatment, ionomer coating, and thermal laminating were performed in the same manner as in Preparation Example 4-1, but the reinforced membrane A/ a catalyst layer/the reinforced membrane B/the reinforced membrane B/the reinforced membrane A structure was thermally laminated to prepare a PTFE/ionomer multilayer composite membrane C with three PTFE layer. The thickness of the multilayer composite membrane C was measured to be about 53 µm.

The catalyst layer is composed of a mesh layer coated with cerium oxide, and was carried out by stacking The catalyst layer between the reinforced membrane A and the reinforced membrane B before being thermally laminated in Preparation Example 4-1. The catalyst layer is to prevent side reactions due to the gas crossover phenomenon that may occur during driving, thereby increasing driving performance and increasing durability.

### Preparation Example 4-4: Preparation of PTFE/Ionomer Multilayer Composite Membrane D

Plasma treatment, ionomer coating, and thermal laminating were performed in the same manner as in Preparation Example 4-1, but the the reinforced membrane A/the reinforced membrane A/the reinforced membrane A/the reinforced membrane A/the reinforced membrane A structure was stacked and thermally laminated to prepare PTFE/ionomer multilayer composite membrane D with four PTFE layer. The thickness of the multilayer composite membrane D was measured to be about 50 µm.

### Preparation Example 4-5: Preparation of PTFE/Ionomer Multilayer Composite Membrane E

Plasma treatment, ionomer coating, and thermal laminating were performed in the same manner as in Preparation Example 4-1, but the reinforced membrane B/the reinforced membrane B/the reinforced membrane B/the reinforced membrane B/the reinforced membrane B structure was stacked and thermally laminated to prepare PTFE/ionomer multilayer composite membrane E having four PTFE layer. The thickness of the multilayer composite membrane E was measured to be about 50 µm.

### Experimental Example 1: Tensile Strength Evaluation

Samples of the Preparation examples were prepared to have a width and a length of 1 cm*10 cm in the MD (Machine Direction) direction and a TD (Transverse Direction) direction, respectively, and the sample was fixed to a universal material tester jig, and tensile strength was evaluated by making the distance between the upper jig and the lower jig 5 cm.

The results are shown in Table 1.

### Experimental Example 2: Evaluation of Ion Conductivity

Samples of the Preparation Examples were prepared to have a composite membrane size of 4 cm×1 cm, and the sample was fastened to an ion conductivity jig. The measurement environment was maintained at a temperature of 80°C and a humidity of 95% with a thermo-hygrostat, and the measurement was performed by an impedance analyzer at a measurement range of 0.001 Hz to 100,000 Hz (based on the through-plane). The results are shown in Table 1.

### Experimental Example 3: Evaluation of hydrogen permeability

Hydrogen permeability of the samples of Preparation Examples was measured at 60°C and 9 bar through the Bubble Flowmeter measurement method, and the results are shown in Table 1.

### Experimental Example 4: Evaluation of Acceleration Durability

After preparing a membrane electrode assembly (MEA) using the one prepared in Preparation Example, OCV was monitored. The cell temperature was set to 90°C and the relative humidity was set to 0% (dry, 30 seconds) - 100% (wet, 45 seconds), and about 10,000 cycles were performed. The results are shown in Table 2.

**[Table 1]**

| Preparation Example | Tensi le Strength (MD, MPa) | Tensi le Strength (TD, MPa) | Ion Conductivity (S/cm) | hydrogen permeability (GPU) |
|---|---|---|---|---|
| Preparation Example 2-1 | 56 | 49 | << 0.1000 | >> 10 |
| Preparation Example 2-2 | 40 | 38 | << 0.1000 | >> 10 |
| Preparation Example 3-1 | 62 | 53 | 0.1215 | 1.286 |
| Preparation Example 3-2 | 44 | 39 | 0.1513 | 1.858 |
| Preparation Example 3-1-1 | 65 | 62 | 0.1339 | 1.277 |
| Preparation Example 3-2-1 | 47 | 38 | 0.1644 | 1.728 |
| Preparation Example 4-1 | 65 | 66 | 0.1490 | 0.398 |
| Preparation Example 4-2 | 61 | 59 | 0.1427 | 0.475 |
| Preparation Example 4-3 | 70 | 68 | 0.1453 | 0.432 |
| Preparation Example 4-4 | 68 | 65 | 0.1243 | 0.230 |
| Preparation Example 4-5 | 48 | 39 | 0.1578 | 0.881 |

As shown in Table 1, it can be seen that the enhanced membranes of Preparation Example 3-1 and Preparation Example 3-2 significantly decreased hydrogen permeability compared to the impregnated membranes of Preparation Example 2-1 and Preparation Example 2-2. In addition, in the case of post-treatment using an acid solution, as shown in Preparation Example 3-1-1 and Preparation Example 3-2-1, the pore decreases, thereby, ion conductivity improves and hydrogen permeability decreases.

In addition, as can be seen in Preparation Example 4-1 to Preparation Example 4-5, PTFE layer used in external multilayer composite membranes has small pore size and porosity, and PTFE layer used in internal multilayer composite membranes has relatively large pore size and porosity, which can simultaneously implement ion conductivity performance, durability, and hydrogen permeability performance.

**[Table 2]**

| Preparation Example | OCV Initial value | OCV Final value |
|---|---|---|
| Preparation Example 4-1 | 0.96 | 0.76 |
| Preparation Example 4-3 | 0.97 | 0.82 |

In addition, as can be seen in Table 2, the durability of multilayer composite membrane is further increased and the driving performance is excellent by using the catalyst layer as in Preparation Example 4-3.

All of the features disclosed in this specification may be combined in any combination. Each feature disclosed in this specification may be replaced by an alternative feature serving the same, equivalent, or similar purpose. Thus, unless expressly stated otherwise, each feature disclosed is only an example of a generic series of equivalent or similar features.

From the above description, one skilled in the art can easily ascertain the essential characteristics of the present invention, and without departing from the spirit and scope thereof, can make various changes and modifications of the invention to adapt it to various usages and conditions. Thus, other embodiments are also within the scope of the following claims.

## Claims

1. a hydrogen ion conductive multilayer composite membrane, comprising one or more inner reinforced membrane comprising a porous PTFE layer impregnated with an ionomer composition and outer reinforced membranes positioned on both sides of the inner reinforced membrane, wherein the outer reinforced membranes comprise a porous PTFE layer impregnated with an ionomer composition.

2. a hydrogen ion conductive multilayer composite membrane of claim 1, wherein the average pore size and porosity of the porous PTFE layer of the outer reinforced membrane are smaller than the average pore size and porosity of the PTFE layer of the inner reinforced membrane, wherein the average pore size of the PTFE layer of the outer reinforced membrane is in the range of 0.1 um to 0.2 µm, and the porosity is in the range of 70% to 80%, wherein the average pore size of the PTFE layer of the inner reinforced membrane is in the range of 0.2 µm to 0.4 µm, and the porosity is in the range of 80% to 90%.

3. a hydrogen ion conductive multilayer composite membrane of claim 1, wherein the inner reinforced membrane is one or stacked in the range of two to five.

4. a hydrogen ion conductive multilayer composite membrane of claim 1, wherein the outer reinforced membrane comprises a PTFE layer impregnated with an ionomer; surface modification layer formed by plasma surface treatment on one or both sides of the PTFE layer; and ionomer layer coated on the surface modification layer.

5. a hydrogen ion conductive multilayer composite membrane of claim 1, wherein the inner reinforced membrane comprises a PTFE layer impregnated with an ionomer; surface modification layer formed by plasma surface treatment on one or both sides of the PTFE layer; and ionomer layer coated on the surface modification layer.

6. a hydrogen ion conductive multilayer composite membrane of claim 4, wherein the viscosity and ionomer concentration of the ionomer composition used to coat the ionomer layer on the surface modification layer are higher than the viscosity and ionomer concentration of the ionomer composition used to impregnate the inside of the PTFE layer.

7. a hydrogen ion conductive multilayer composite membrane of claim 6, wherein the viscosity difference is in the range of 10 cp to 100 cp at 25°C, and the concentration difference is in the range of 30% to 80% by weight.

8. a hydrogen ion conductive multilayer composite membrane of claim 1, wherein one or more of the inner reinforced membrane and the outer reinforced membrane are treated with acid to reduce pores.

9. a hydrogen ion conductive multilayer composite membrane of claim 1, wherein the inner reinforced membrane and the outer reinforced membrane are pre-treated with plasma before lamination, coated with ionomer composition, and then laminated, wherein another ionomer coating layer exists between the inner reinforced membrane and the outer reinforced membrane.

10. a hydrogen ion conductive multilayer composite membrane of claim 1, wherein one or more catalyst mesh layers exist by laminating catalyst mesh layer between the at least one outer reinforced membrane and the at least one inner reinforced membrane.

11. a water electrolysis system, comprising the hydrogen ion conductive multi-layer composite membrane of claim 1 as a separation membrane.

12. a fuel cell, comprising the hydrogen ion conductive multi-layer composite membrane of claim 1 as a separation membrane.
